# EUROPEAN PATENT APPLICATION

(11) **EP 4 553 923 A1**
(43) Date of publication of application: **14.05.2025**
(21) Application number: 24211315.7
(22) Date of filing: 07.11.2024
(51) Int. Cl.: H01M 4/36, H01M 10/0587, H01M 4/02

(54) **NEGATIVE ELECTRODE FOR RECHARGEABLE BATTERY AND RECHARGEABLE BATTERY INCLUDING THE SAME**

(30) Priority: 10.11.2023 KR 20230155626
(71) Applicant: SAMSUNG SDI CO., LTD., Yongin-si, Gyeonggi-do 17084 (KR)
(72) Inventor: Kim, Suji, 17084 Gyeonggi-do (KR); Lee, Seungjae, 17084 Gyeonggi-do (KR); An, Hoyong, 17084 Gyeonggi-do (KR); Kim, Soochan, 17084 Gyeonggi-do (KR); Kim, Beom Kwon, 17084 Gyeonggi-do (KR)
(74) Representative: Michalski Hüttermann & Partner Patentanwälte mbB

(57) **Abstract**

A negative electrode for a rechargeable battery includes a base material having a strip shape, a length of the base material in a first direction being relatively shorter than a width of the base material in a second direction intersecting the first direction, and an active material layer on the base material and including an aligned part and a non-aligned part, the active material arranged in the first direction in an order of the non-aligned part, the aligned part, and the non-aligned part, in which the aligned part includes a lower layer and an upper layer stacked on the base material, and alignment directions of the lower layer and the upper layer are different from each other.

## Description

### BACKGROUND OF THE INVENTION

### a. Field of the Invention

Embodiments of the present disclosure relate to a negative electrode for a rechargeable battery and a rechargeable battery including the same.

### b. Description of the Related Art

With technological developments and demands for mobile devices, the use of rechargeable batteries as an energy source is increasing.

One type/kind of rechargeable battery is a cylindrical rechargeable battery. A cylindrical rechargeable battery may include an electrode assembly that is formed by disposing electrodes on both surfaces (e.g., opposite surfaces or sides) of a separator and winding the electrodes into a jelly roll-shape. A center pin may be arranged in a hollow portion at a center of the electrode assembly, and the electrode assembly may be installed into a case A cap assembly may close and seal an open side of the case.

The jelly roll-shaped electrode assembly is formed by repeatedly winding around the center pin, and a radius of curvature of the electrode assembly is different on inner and outer surfaces of the electrode. To address this issue, an active material layer may be formed by pattern coating. However, as a size of a battery increases, a stripe coating method that forms an active material continuously may be applied rather than the pattern coating.

However, when an electrolytic solution is injected into the cylindrical electrode assembly, a mixture layer in a center portion of the electrode assembly may have decreased impregnation with the electrolytic solution compared to electrode plates at upper and lower portions of the electrode assembly. Accordingly, a stripe in which the electrolytic solution does not moisten(or contact) the electrode assembly may be formed in the center portion of the electrode assembly. In this way, lithium is precipitated into an area where the electrolytic solution is not moistened, resulting in a decrease in battery performance , a decreased lifespan of the electrode plate, and kinetic inferiority.

In order to realize relatively high capacity, a thickness of the mixture layer formed on the electrode plate may be further increased and may become thicker, causing the non-moisture phenomenon of the electrolytic solution to become more severe, and in the case of the wound type or kind electrode assembly, the undesired non-moisture phenomenon may further increase toward the center of the electrode assembly.

The above information disclosed in this Background section is only for enhancement of understanding of the background of the disclosure and therefore it may contain information that does not constitute prior art.

### SUMMARY OF THE INVENTION

Aspects of embodiments of the present disclosure relate to a relatively high-capacity negative electrode for a rechargeable battery and a rechargeable battery including the same where even if a thickness of an active material layer increases, a non-moisture area is not generated, is not increased, and/or is even reduced.

Additional aspects will be set forth in part in the description which follows and, in part, will be apparent from the description, or may be learned by practice of the presented embodiments of the disclosure.

According to one or more embodiments of the present disclosure, a negative electrode for a rechargeable battery includes a base material having a strip shape where a width of the base material in a first direction is relatively shorter than a length of the base material in a second direction intersecting the first direction, and an active material layer on the base material and including an aligned part and a non-aligned part, the active material layer arranged in the first direction in an order of the non-aligned part, the aligned part, and the non-aligned part, in which the aligned part includes a lower layer and an upper layer stacked on the base material, and alignment directions of the lower layer and the upper layer are different from each other.

In one or more embodiments, the upper layer may include active material particles aligned at an angle (e.g., a set or predetermined angle) with respect to a surface (e.g., in a cross-sectional view) of the base material, and the lower layer may include active material particles arranged in a direction parallel to the surface (e.g., the cross-sectional view) of the base material.

In one or more embodiments, a I₀₀₂/I₁₁₀ value of the upper layer may be smaller than a I₀₀₂/I₁₁₀ value of the lower layer.

In one or more embodiments, the angle of the active material particles of the upper layer may have an angle of about 10° to about 80° with respect to the surface of the base material.

In one or more embodiments, a I₀₀₂/I₁₁₀ value of the aligned part may be smaller than a I₀₀₂/I₁₁₀ value of the non-aligned part.

In one or more embodiments, the upper layer and the lower layer may be made of different active materials.

In one or more embodiments, a width of the aligned part in the first direction may be about 10% to about 90% of a width of the active material layer in the first direction.

In one or more embodiments, a thickness of the lower layer may be about 10% to about 90% of a total thickness of the active material layer, and a thickness of the upper layer may be about 10% to about 90% of the total thickness of the active material layer.

According to one or more embodiments of the present disclosure, a rechargeable battery includes a winding type or kind (*e.g*., a jelly-roll) electrode assembly including the negative electrode, a separator, and a positive electrode, a case accommodating the winding type or kind electrode assembly, a cap plate installed in an opening of the case to seal an inside of the case, and an electrolyte accommodated with the winding type or kind electrode assembly in the case, in which the first direction is a direction in which the electrolyte (*e.g*., electrolytic solution) is injected into the case.

In one or more embodiments, the winding type or kind electrode assembly may be a cylindrical electrode assembly.

According to one or more embodiments, if (*e.g*., when) the aligned part is arranged in the portion where the non-moisture area occurs, the electrolytic solution can move smoothly and the non-moisture area can be minimized or reduced. Therefore, by increasing the thickness of the active material layer, it is possible to provide the negative electrode that minimizes or reduces the non-moisture area while maintaining relatively high capacity, and to provide a rechargeable battery including the negative electrode.

### BRIEF DESCRIPTION OF THE DRAWINGS

FIG. 1 is a perspective, cross-sectional view of a rechargeable battery according to one or more embodiments of the present disclosure.
FIG. 2 is a plan view of an unfolded negative electrode according to one or more embodiments of the present disclosure.
FIG. 3 is a cross-sectional view taken along the line III-III of FIG. 2, according to one or more embodiments of the present disclosure.
FIG. 4 is a schematic diagram for describing an alignment of a negative electrode active material according to one or more embodiments of the present disclosure.
FIG. 5 is an image measuring impregnability of a cylindrical electrode assembly according to one or more embodiments of the present disclosure.
FIG. 6 is an image measuring the impregnability of the cylindrical electrode assembly according to the comparable art.
FIG. 7 is a diagram for describing movement of an electrolytic solution according to one or more embodiments of the present disclosure.
FIG. 8 is a graph showing dQ/dV according to a relative voltage in a Comparative Example and an Example.

### DETAILED DESCRIPTION OF THE EMBODIMENTS

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Hereinafter, embodiments of the present disclosure will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

The size and thickness of each component illustrated in the drawings may be exaggerated or reduced for convenience of description, and the present disclosure is not necessarily limited to the illustrated examples.

In the drawings, the thickness of layers, films, panels, regions, etc., may be exaggerated for clarity. In addition, in the accompanying drawings, thicknesses of some of layers and regions may be exaggerated for convenience of explanation.

Unless otherwise noted, like reference numerals denote like elements throughout the attached drawings and the written description, and thus, duplicative descriptions thereof may not be provided.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

Spatially relative terms, such as "on," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element, such as an area, layer, film, region or portion, is referred to as being "on," "connected to," or "coupled to" another element, it can be directly on, connected to, or coupled to the other element, or one or more intervening elements may be present. In addition, it will also be understood that when an element is referred to as being "between" two elements, it can be the only element between the two elements, or one or more intervening elements may also be present.

It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof.

As used herein, the singular forms "a," "an" and "the" are intended to include the plural forms as well, unless the context clearly indicates otherwise. As used herein, the term "and/or" includes any and all combinations of one or more of the associated listed items.

Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

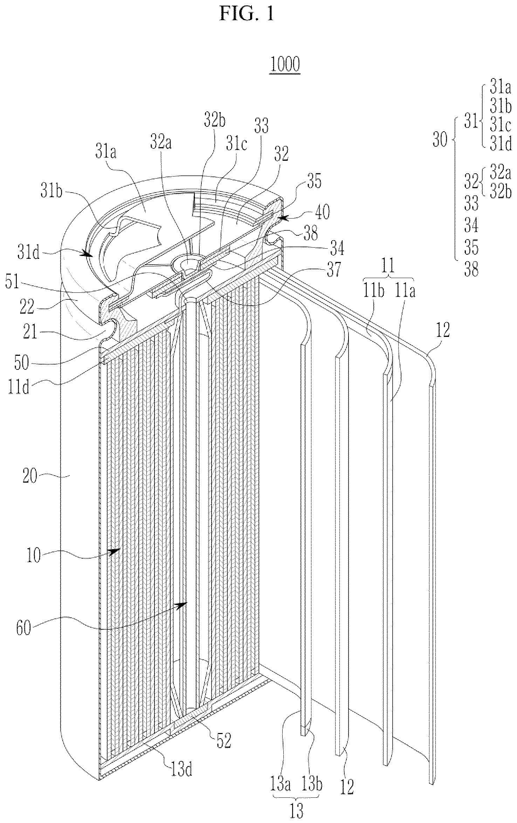

FIG. 1 is a perspective, cross-sectional view of a rechargeable battery 1000 according to one or more embodiments of the present disclosure.

As illustrated in FIG. 1, a rechargeable battery 1000 according to one or more embodiments of the present disclosure includes an electrode assembly 10, a case 20 having the electrode assembly 10 built thereinto, a cap assembly 30 coupled to an opening of the case 20 via a gasket and electrically connected to the electrode assembly 10, an insulating plate 50 provided between the cap assembly 30 and the electrode assembly 10, and a center pin 60 arranged at a center of the electrode assembly 10.

The electrode assembly 10 includes a first electrode 11, a separator 12, and a second electrode 13 that are sequentially stacked. The electrode assembly 10 may be a cylindrical jelly roll in which the first electrode 11, the separator 12, and the second electrode 13 are stacked and then wound around the center pin 60.

The first electrode 11 is formed of a thin conductive metal plate and includes a base material utilized as a current collector and an active material layer. For example, the base material of the first electrode 11 may be aluminum (Al).

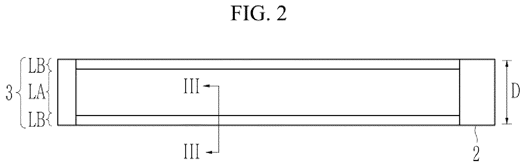

The first electrode 11 includes a base material, an electrode active part 11a in which an active material layer is formed on both surfaces (e.g., opposite surfaces or opposite sides) of the base material, and a first electrode uncoated part 11b, which is an area in which the base material is exposed because the active material layer is not formed. The first electrode uncoated part 11b may be formed along an edge in the winding direction along the active material layer, but the present disclosure is not limited thereto, and may be formed only at an end of the winding direction (see, e.g., FIG. 2) by removing the part formed along the edge in the winding direction through a slitting process.

As a positive electrode active material of the first electrode 11, a compound (lithiated intercalation compound) capable of reversible intercalation and deintercalation of lithium may be utilized. For example, one or more types (kinds) of complex oxides including lithium and metals selected from among cobalt, manganese, nickel, and/or a (*e.g*., any suitable) combination thereof may be utilized. The content (*e.g*., amount) of the positive electrode active material may be about 90 wt% to about 98 wt% based on a total weight of the positive electrode active material layer.

The positive electrode active material layer may further include a binder and a conductive material. In such embodiments, the content (*e.g*., amount) of the binder and the conductive material may each be about 1 wt% to about 5 wt% based on the total weight of the positive electrode active material layer.

The binder serves to adhere the positive electrode active material particles to each other suitably well and also to adhere the positive electrode active material to the base material which is the current collector suitably well. Representative examples of the binder may include polyvinyl alcohol, carboxymethylcellulose, hydroxypropyl cellulose, diacetyl cellulose, polyvinylchloride, carboxylated polyvinylchloride, polyvinyl fluoride, polymers containing ethylene oxide, polyvinylpyrrolidone, polyurethane, polytetrafluoroethylene, polyvinylidene fluoride, polyethylene, polypropylene, styrene butadiene rubber, acrylated styrene butadiene rubber, epoxy resin, nylon, etc., but the present disclosure is not limited thereto. The conductive material is utilized to impart conductivity to the electrode, and in the configured battery, any electronically conductive material may be utilized as long as it does not cause a chemical change.

The second electrode 13 is formed of a thin conductive metal plate and includes a base material utilized as a current collector and an active material layer. For example, the base material of the second electrode 13 may be copper (Cu).

The second electrode 13 includes a base material, a second electrode active part 13a in which an active material layer is formed on both surfaces (e.g., opposite surfaces or opposite sides) of the base material, and a second electrode uncoated part 13b, which is an area in which the base material is exposed because the active material layer is not formed. The second electrode uncoated part 13b may be formed on at least one edge of the active material layer and may be formed along an edge in the winding direction along the active material layer, but the present disclosure is not limited thereto, and the second electrode uncoated part 13b may be formed only at the end of the winding direction by removing the part formed along the edge in the winding direction through the slitting process.

The negative electrode active material of the second electrode 13 may be a carbon-based active material. The carbon-based negative electrode active material may be artificial graphite and/or a (*e.g*., any suitable) mixture of artificial graphite and natural graphite. When utilizing the artificial graphite or a crystalline carbon-based material that is the mixture of the artificial graphite and natural graphite as the negative electrode active material, crystallographic characteristics of the particles are more developed compared to if (*e.g*., when) utilizing an amorphous carbon-based active material, so further improving alignment characteristics of a carbon material within an electrode plate with respect to an external magnetic flux may be desirable. The shape of the artificial graphite or natural graphite may be an amorphous shape, a plate shape (*e.g*., in a form of plates), a flake shape (*e.g*., in a form of flakes), a spherical shape, a fibrous shape, and/or a (*e.g*., any suitable) combination thereof, and may be any shape. In one or more embodiments, if (e.g., when) utilizing the mixture of the artificial graphite and natural graphite, a mixing ratio may be a weight (wt%) ratio of about 70:30 to about 95:5.

In one or more embodiments, the negative electrode active material may further include at least one of a Si-based negative electrode active material, a Sn-based negative electrode active material, or a LiMOₓ (M = metal)-based negative electrode active material. When the negative electrode active material further includes these negative electrode active materials, that is, if (e.g., when) the negative electrode active material includes the carbon-based negative electrode active material as a first negative electrode active material and one of the above negative electrode active materials (*e.g*., the Si-based, Sn-based, or LiMOₓ-based negative electrode active materials) as a second negative electrode active material, the mixing ratio of the first negative electrode active material and the second negative electrode active material may be a weight ratio of about 50:50 to about 99:1.

The LiMOₓ (M = metal)-based negative electrode active material may be lithium vanadium oxide.

The Si-based negative electrode active material may include Si, a Si-C composite body, SiOₓ (0 < x ≤ 2), and Si-Q alloy (the Q is an element selected from the group consisting of alkali metals, alkaline earth metals, Group 13 elements, Group 14 elements, Group 15 elements, Group 16 elements, transition metals, rare earth elements, and/or a (*e.g*., any suitable) combination thereof, but not Si), and the Sn-based negative electrode active material may include Sn, SnOₓ (0 < x ≤ 2, including SnO₂), and/or Sn-R alloy (the R is an element selected from the group consisting of alkali metals, alkaline earth metals, Group 13 elements, Group 14 elements, Group 15 elements, Group 16 elements, transition metals, rare earth elements, and/or a (*e.g*., any suitable) combination thereof, but not Sn), and in addition, a mixture of at least one of them and SiO₂ may also be utilized. As the elements Q and R, elements selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (*e.g*., any suitable) combination thereof may be utilized.

The content (*e.g*., amount) of the negative electrode active material in the negative electrode active material layer may be about 95 wt% to about 99 wt% based on the total weight of the negative electrode active material layer.

The negative electrode active material layer may further include a binder, and optionally may further include a conductive material. The content (*e.g*., amount) of the binder in the negative electrode active material layer may be 1 wt% to 5 wt% based on the total weight of the negative electrode active material layer. In one or more embodiments, if (*e.g*., when) the conductive material is further included, the negative electrode active material layer may contain about 90% to about 98 wt% of negative electrode active material, about 1% to about 5 wt% of binder, and about 1% to about 5 wt% of conductive material.

The binder adheres the negative electrode active material particles to each other suitably well and also adheres the negative electrode active material to the negative electrode base material suitably well. As the binder, a non-aqueous binder, an aqueous binder, and/or a (*e.g*., any suitable) combination thereof may be utilized.

Examples of the non-aqueous binder may include polyvinylchloride, carboxylated polyvinylchloride, polyvinylfluoride, and polymers containing ethylene oxide, polyvinylpyrrolidone, polyurethane, polytetrafluoroethylene, polyvinylidene fluoride, polyethylene, polypropylene, polyamideimide, polyimide and/or a (*e.g*., any suitable) combination thereof.

Examples of the aqueous binders may include styrene-butadiene rubber, acrylated styrene-butadiene rubber (SBR), acrylo nitrile-butadiene rubber, acryl rubber, butyl rubber, ethylene propylene copolymer, polyphelohydrin, polyphosphazene, polyacrylonitrile, polystyrene, ethylene propylene dienecopolymer, polyvinyl pyridine, chlorosulfonated polyethylene, latex, polyester resin, acryl resin, phenol resin, epoxy resin, polyvinyl alcohol, acrylate-based resin, and/or a (*e.g*., any suitable) combination thereof

When an aqueous binder is utilized as the negative electrode binder, a cellulose-based compound capable of imparting viscosity may be further included as a thickener. As the cellulose-based compound, one or more types (kinds) of carboxymethyl cellulose, hydroxypropyl methyl cellulose, methyl cellulose, and alkali metal salts thereof may be utilized. Na, K, or Li may be utilized as the alkali metal. The amount of thickener utilized may be about 0.1 parts by weight to about 3 parts by weight based on 100 parts by weight of the negative electrode active material.

The conductive material is utilized to impart conductivity to the electrode, and in the configured battery, any electronically conductive material may be utilized as long as it does not cause a chemical change. Examples of the conductive material may include carbon-based materials such as natural graphite, artificial graphite, carbon black, acetylene black, Ketjen black, and/or carbon fiber; metallic materials such as metal powders such as copper, nickel, aluminum, and/or silver, and/or metal fibers; conductive polymers such as polyphenylene derivatives; and/or conductive materials containing a (*e.g*., any suitable) mixture thereof.

In one or more embodiments, a Brunauer-Emmett-Teller (BET) specific surface area of the negative electrode active material layer may be less than about 3.0 m²/g, and may also be about 0.6 m²/g to about 1.2 m²/g. When the BET specific surface area of the negative electrode active material layer is less than about 3.0 m²/g, the electrochemical life characteristics of the cell may be improved.

The BET measurement is performed by a nitrogen gas adsorption method that charges and discharges a lithium rechargeable battery including the negative electrode, cutting a negative electrode obtained by dismantling the fully discharged battery into a certain size, and putting the cut negative electrode in a BET sample holder.

The negative electrode may have a cross-sectional loading level (L/L) of about 6 mg/cm² to about 65 mg/cm².

In one or more embodiments, the negative electrode active material layer according to one or more embodiments of the present disclosure includes an aligned part and a non-aligned part.

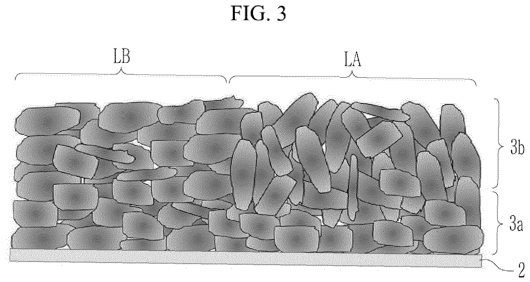

FIG. 2 is a plan view of an unfolded negative electrode according to one or more embodiments of the present disclosure. FIG. 3 is a cross-sectional view taken along the line III-III of FIG. 2, according to one or more embodiments of the present disclosure.

Referring to FIGs. 2 and 3, the negative electrode, which is the second electrode 13, includes a base material 2 and an active material layer 3 formed on the base material 2. The base material 2 may have a strip shape in which a width in a first direction is relatively shorter than a length in a second direction intersecting the first direction.

The active material layer 3 includes an aligned part LA and a non-aligned part LB, and the aligned part LA may include a lower layer 3a positioned on the base material 2, and an upper layer 3b positioned on the lower layer 3a. The aligned part LA may be about 10% to about 90% based on a total width D of the active material layer 3.

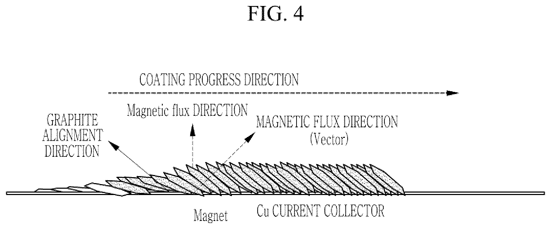

FIG. 4 is a schematic diagram for describing an alignment of a negative electrode active material according to one or more embodiments of the present disclosure.

The aligned part LA may be aligned so that the active material particles have a constant angle with respect to a surface (*e.g*., upper surface) of the base material. Referring to FIG. 4, after the negative electrode base material is applied while moving, the active material particles are aligned at a constant angle with respect to the surface (*e.g*., upper surface) of the base material utilizing a magnetic flux.

The magnetic flux caused by a magnet is formed in a direction normal (*e.g*., perpendicular) to the negative electrode base material, but the direction in which the magnetic field is formed depends on the coating speed (*e.g*., moving speed of the negative electrode base material), and is formed at a constant angle as a vector function, so the negative active material particles included in the negative active material composition may have a shape that stands, *i.e*., is aligned at a certain angle with respect to the surface of the negative electrode base material.

The alignment angle and direction of the aligned part LA may be adjusted by the strength of the magnetic flux applied to the active material layer, the exposure time to the magnetic flux, and the viscosity of the negative active material composition.

Because a separate alignment process is not performed in the non-aligned part LB, the active material particles having various directions and angles may be mixed. Accordingly, the non-aligned part LB may be diffuse-aligned when compared to the aligned part LA.

The movement of Li ions in the active material layer of the non-aligned part LB is relatively less smooth compared to the active material layer of the aligned part LA, so direct current internal resistance may be relatively higher in the non-aligned part LB.

When a ratio of peak intensity of a (002) plane to peak intensity of a (110) plane of the non-aligned part LB is set to 1 during XRD measurement utilizing CuKα rays of the negative electrode, the ratio of the peak intensity of the (002) plane to the peak intensity of the (110) plane of the aligned part LA may be less than 1. For example, I₀₀₂/I₁₁₀ of the non-aligned part LB may be about 200 or more, and I₀₀₂/I₁₁₀ of the aligned part LA may be less than about 200.

In one or more embodiments, in order to increase the impregnability of the active material layer while the aligned part LA maintains the adhesion to the base material 2, the upper layer 3b may be aligned while the lower layer 3a remains non-aligned. Accordingly, the lower layer 3a may be formed of 10% to 90% based on the total thickness of the active material layer, and the upper layer 3b may be formed of 10% to 90% based on the total thickness of the active material layer.

The active material particles of the upper layer 3b may be aligned at an angle of about 10° to about 80° based on (relative to) the surface (*e.g*., upper surface) of the base material 2, and if (*e.g*., when) the peak intensity ratio I₀₀₂/I₁₁₀ of the lower layer 3a is 1, the peak intensity ratio of the upper layer 3b may be less than 1. For example, if (*e.g*., when) the peak intensity ratio of the lower layer 3a is about 200, the peak intensity ratio of the upper layer 3b may be less than about 200.

Referring back to FIGs. 2 and 3, the aligned part LA may be made of a different material from the non-aligned part LB in order to increase alignment, and the lower layer 3a and the upper layer 3b of the aligned part LA may also be made of different materials.

The lower layer 3a and the upper layer 3b of the aligned part LA have been described as being made of the same material, but the present disclosure is not limited thereto, and the lower and upper layers may be made of different materials.

The degree of alignment or alignment angle of the active material particles in the lower layer 3a and the upper layer 3b may be different from each other. The upper layer 3b may be aligned in a direction normal (*e.g*., perpendicular) to the base material and at a greater angle than the lower layer 3a relative to the surface (*e.g*., upper surface) of the base material 2, and the lower layer 3a may be aligned at a lower angle than the upper layer 3b relative to the surface (*e.g*., upper surface) of the base material 2, or may not be aligned at a specific angle.

Accordingly, the upper layer 3b may further include more active material particles aligned in a direction normal (*e.g*., perpendicular) to the surface (*e.g*., upper surface) of the base material 2 than the lower layer 3a, and the lower layer 3a may further include more active material particles aligned in a direction parallel to the surface (*e.g*., upper surface) of the base material than the upper layer 3b, when viewed in a cross-sectional view as shown, for example, in FIG. 3. In one or more embodiments, the lower layer 3a may be diffuse-aligned like the non-aligned part LB.

The active material particles of the negative electrode have an elongated shape in approximately one direction, and the aligned active material particles have a major axis of the active material particles inclined with respect to the base material. Accordingly, an end portion of the active material particles in the major-axis direction may come into contact with the base material, and the adhesion with the base material 2 may be relatively lower than that of the non-aligned part LB whose major axis is parallel to the base material.

Therefore, in one or more embodiments of the present disclosure, the lower layer 3a is relatively non-aligned compared to the upper layer 3b, thereby increasing the adhesion to the base material.

In one or more embodiments, the upper layer 3b may be aligned to increase the mobility of the electrolytic solution and minimize or reduce the occurrence of the non-moisture area.

In this way, in one or more embodiments of the present disclosure, the occurrence of the non-moisture area in the winding type or kind electrode assembly may be minimized or reduced by arranging the aligned part and the non-aligned part with different degrees of alignment depending on the position.

Referring back to FIG. 1, the separator 12 is arranged between the first electrode 11 and the second electrode 13 and insulates them, and as the separator 12, a multilayer film of two or more layers of polyethylene, polypropylene, polyvinylidene fluoride, or a (*e.g*., any suitable) combination thereof may be utilized, and a mixed multilayer such as a two-layer separator of polyethylene/polypropylene, a three-layer separator of polyethylene/polypropylene/polyethylene, and a three-layer separator of polypropylene/polyethylene/polypropylene may be utilized.

In the jelly roll state, a first electrode current collecting plate 11d is connected to the first electrode uncoated part 11b of the electrode assembly 10, and a second electrode current collecting plate 13d is connected to the second electrode uncoated part 13b of electrode assembly 10.

The second electrode current collecting plate 13d is in contact with the case 20, but the first electrode current collecting plate 11d is formed to be narrower than the second electrode current collecting plate 13d, and thus, is formed not to be in contact with the case 20.

The first electrode uncoated part 11b is bent toward the center pin 60, which is the center of the electrode assembly 10, and neighboring first electrode uncoated parts 11b may overlap each other and overlap to be electrically connected. The first electrode uncoated part 11b may be electrically connected to the first electrode current collecting plate 11d in an overlapping state.

The first electrode uncoated part 11b includes one surface electrically connected by contacting the first electrode current collecting plate 11d and the other surface facing the end of the second electrode 13, and the other surface is spaced and/or apart (*e.g*., spaced apart or separated) from an end portion of the second electrode 13.

A lead tab 37 is electrically connected to the first electrode current collecting plate 11d.

One end of the lead tab 37 may be connected to the first electrode uncoated part 11b by welding to the first electrode current collecting plate 11d, and the other end may be electrically connected to the cap assembly 30. The lead tab 37 may be bent so that one surface faces the cap assembly 30 to increase the contact area with the cap assembly 30.

An insulating plate 50 having an opening exposing the center pin 60 is positioned on the first electrode current collecting plate 11d.

The insulating plate 50 is formed to be larger than the first electrode current collecting plate 11d, so that the insulating plate 50 may contact the inner surface of the case 20. If (*e.g*., when) the insulating plate 50 is formed larger than the first electrode current collecting plate 11d, a constant gap is formed between the first electrode current collecting plate 11d and the case 20 by the width of the insulating plate 50 protruding to an outside of the first electrode current collecting plate 11d. The gap between the first electrode current collecting plate 11d and the case 20 may prevent or reduce the first electrode current collecting plate 11d and the case 20 from contacting and short-circuiting.

The lead tab 37 may be in contact with and be connected to the first auxiliary plate 34 of the cap assembly 30, which will be described in more detail later, through the opening 51 of the insulating plate 50.

Because the electrode assembly 10 is wound around the center pin 60, the center pin 60 is arranged at the center of the electrode assembly 10 and may be arranged parallel to the direction in which the electrode assembly 10 is inserted into the case 20.

The center pin 60 is to minimize or reduce deformation and/or maintain a shape close to the shape before deformation if (*e.g*., when) receiving an entire compressive load or local impact load acting from outside of the rechargeable battery 1000, and may be a hollow circular pipe. In one or more embodiments, the center pin 60 may serve as a moving passage for gas generated internally. If necessary or desired, the center pin 60 may not be provided.

The center pin 60 may be formed of a material having certain rigidity, for example, a conductive metal such as steel, steel alloy, aluminum, aluminum alloy, and/or the like, in order to be minimally deformed when exposed to an external impact. In this way, because the center pin 60 is conductive, both ends of the center pin 60 are installed to maintain an electrically insulated state between the first electrode current collecting plate 11d and the second electrode current collecting plate 13d.

For example, an insulating pad 52 is arranged between a lower end of the center pin 60 and the corresponding second electrode current collecting plate 13d. An upper end of the center pin 60 passes through a through hole formed in the center of the first electrode current collecting plate 11d in an insulated state and is supported on the insulating plate 50. In one or more embodiments, the upper end of the center pin 60 may be spaced and/or apart (*e.g*., spaced apart or separated) from the through hole of the first electrode current collecting plate 11d, and an insulating member may be interposed therebetween. Accordingly, the movement of the center pin 60 in the longitudinal direction of the center pin 60 is restricted, and the center pin 60 may be maintained in a stable state at the center of the electrode assembly 10.

One side of the case 20 is open so that the electrode assembly 10 may be inserted along with the electrolyte, and the case 20 may be formed to have approximately the same shape as the jelly roll-shaped electrode assembly 10.

For example, the case 20 may include a circular bottom portion and a cylindrical side portion extending a certain length upward from the bottom portion. During the assembly process of the rechargeable battery 1000, the upper portion of the cylindrical case may be open. Therefore, during the assembly process of the rechargeable battery 1000, the electrode assembly may be inserted into the cylindrical case, and then the electrolytic solution may be injected into the cylindrical case.

The electrolytic solution allows lithium ions generated by electrochemical reactions to move between the first and second electrodes inside the battery. The electrolytic solution may be composed of lithium salts such as LiPF₆ and/or LiBF₄ in organic solvents such as ethylene carbonate (EC), propylene carbonate (PC), diethyl carbonate (DEC), and/or ethyl methyl carbonate (EMC). The electrolytic solution may be liquid, solid, or gel phase.

The case 20 is connected to the second electrode current collecting plate 13d of the electrode assembly and may function as a second electrode terminal of the rechargeable battery 1000. Therefore, the case 20 may be made of a conductive metal (*e.g*., electron conductor metal) such as aluminum, aluminum alloy, or nickel-plated steel. In one or more embodiments, a separate electrode tab may be attached and connected to the second electrode current collecting plate 13d, like the first electrode current collecting plate 11d.

The cap assembly 30 is located in the opening of the case 20 and is coupled to the case 20 with the gasket 40 interposed therebetween. The gasket 40 insulates the case 20 and the cap assembly 30 and seals the inside of the case 20 that accommodates the electrode assembly 10 and the electrolytic solution.

The cap assembly 30 includes a cap plate 31, a positive temperature coefficient element 35, a vent plate 32, an insulating member 33, a first auxiliary plate 34, and a second auxiliary plate 38.

The first auxiliary plate 34 may electrically connected to the lead tab 37, and may be coupled to the lead tab 37 by welding.

The second auxiliary plate 38 may be stacked on the first auxiliary plate 34 and electrically connected to the first auxiliary plate 34, and may be coupled to the first auxiliary plate 34 by the welding. The second auxiliary plate 38 is located at the center of the electrode assembly 10 corresponding to the center pin 60 and has a through hole exposing the first auxiliary plate 34.

The vent plate 32 is located on the second auxiliary plate 38 with the insulating member 33 interposed therebetween. The edge of the vent plate 32 may be inserted into the gasket 40 and coupled to the case 20.

The vent plate 32 includes a vent 32a located in a portion corresponding to the center pin 60. The vent 32a protrudes from the vent plate 32 toward the electrode assembly 10 and is in contact with and electrically connected to the first auxiliary plate 34 through the through hole. The vent plate 32 may have a notch 32b around the vent 32a that guides the damage to the vent 32a.

The vent 32a may be damaged under a preset pressure condition, releasing the internal gas to the outside and blocking the electrical connection with the first auxiliary plate 34. For example, if (*e.g*., when) the internal pressure of the case 20 increases due to the generation of gas, the notch 32b is damaged in advance and the gas is discharged to the outside through the exhaust port 31d, which will be described in more detail later, thereby preventing or substantially preventing the rechargeable battery 1000 from expanding or exploding.

In one or more embodiments, if (*e.g*., when) the abnormal reaction continues and the vent 32a is damaged, the electrical connection between the vent plate 32 and the first auxiliary plate 34 is disconnected. Accordingly, the electrical connection between the cap plate 31 and the first auxiliary plate 34, which are electrically connected to the vent plate 32, is disconnected, and thus, no more current flows.

The cap plate 31 includes a center plate 31a corresponding to the center pin 60, which is the center of the electrode assembly 10, a plurality of branch parts 31b extending from the center plate 31a toward the gasket 40, and a coupling plate 31c that is connected to one end of the branch parts 31b and inserted into and coupled to the gasket 40. An exhaust port 31d that is open to the outside and discharges internal gas is formed between adjacent branch parts 31b.

The branch part 31b is connected to the center plate 31a while bent from the coupling plate 31c, so that the center of the cap plate 31 may protrude to the outside of the case 20. The cap plate 31 is electrically connected to the first electrode current collecting plate 11d through the vent plate 32, the second auxiliary plate 38, the first auxiliary plate 34, and the lead tab 37, and thus, may be utilized as the first electrode terminal of the rechargeable battery 1000. Therefore, if (*e.g*., when) the center of the cap plate 31 is formed to protrude to the outside of the case 20, the terminal connection with an external device may be facilitated.

In one or more embodiments, the positive temperature coefficient element 35 may be formed along the edge of the cap plate 31, and may be inserted into and coupled to the gasket 40 while stacked between the coupling plate 31c of the cap plate 31 and the edge of the vent plate 32.

The positive temperature coefficient element 35 is installed between the cap plate 31 and the vent plate 32, and may regulate the current flow between the cap plate 31 and the vent plate 32 according to the internal temperature of the rechargeable battery 1000.

If (*e.g*., when) the internal temperature is within a preset range, the positive temperature coefficient element 35 acts as a conductor (electron conductor) to electrically connect between the cap plate 31 and the vent plate 32. However, if (*e.g*., when) the internal temperature exceeds the preset temperature, the positive temperature coefficient element 35 has an electrical resistance that increases to infinity (electron insulator). Therefore, the positive temperature coefficient element 35 may block or reduce the flow of the charge or discharge current between the cap plate 31 and the vent plate 32.

The cap assembly 30 is inserted into the gasket 40 in a form in which the vent plate 32, the positive temperature coefficient element 35, and the cap plate 31 are stacked on the edge of the cap assembly 30 while the electrode assembly 10 is inserted into the case 20, and then is inserted into the opening of the case 20.

Then, the cap assembly 30 is fixed to the opening of the case 20 through a crimping process. In this case, a beading part 21 and a crimping part 22 may be formed on a side adjacent to the opening of the case 20. The beading part 21 may be formed through a beading process. The beading part 21 has a structure that is depressed from the upper side of the case 20 to a radial center of the case 20 while the electrode assembly 10 is accommodated in the case 20, and prevents or protects the electrode assembly 10 from moving up and down.

The crimping part 22 is connected to the beading part 21 in a structure that protrudes relatively from the beading part 21 in the radial direction, and holds an outer circumferential surface (edge) of the cap assembly 30 via the gasket 40, where upper and lower surfaces of the cap assembly 30 are connected to the outer circumferential surface (edge).

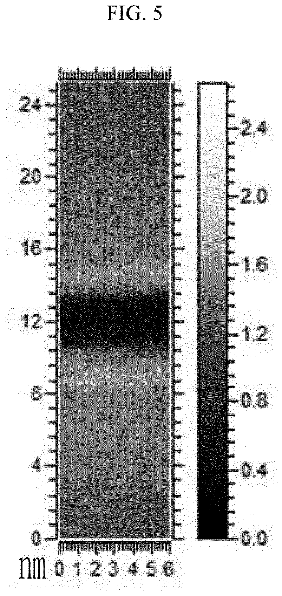

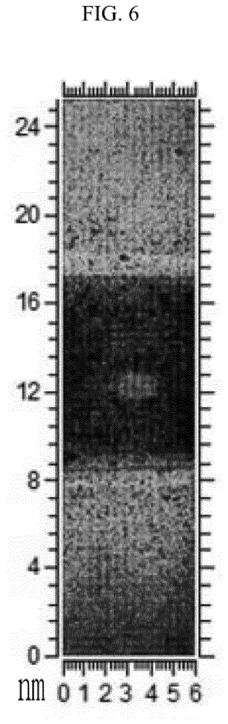

FIG. 5 is a image measuring impregnability of a cylindrical electrode assembly according to one or more embodiments of the present disclosure. FIG. 6 is a image measuring the impregnability of the cylindrical electrode assembly according to the comparable art.

In FIGS. 5 and 6, as the color becomes darker, it indicates the degree to which electrolytic solution was not delivered is higher. In FIGs. 5 and 6, the area of the non-moisture area of the electrode assembly according to one or more embodiments of the present disclosure in FIG. 5 is smaller than the area of the non-moisture area of the electrode assembly according to the comparable art in FIG. 6.

Thus, according to one or more embodiments of the present disclosure, by disposing the aligned part between the non-aligned parts so that the aligned part is located in the center of the cylindrical electrode assembly, it is possible to minimize or reduce the occurrence of the non-moisture area in the center of the winding type or kind electrode assembly.

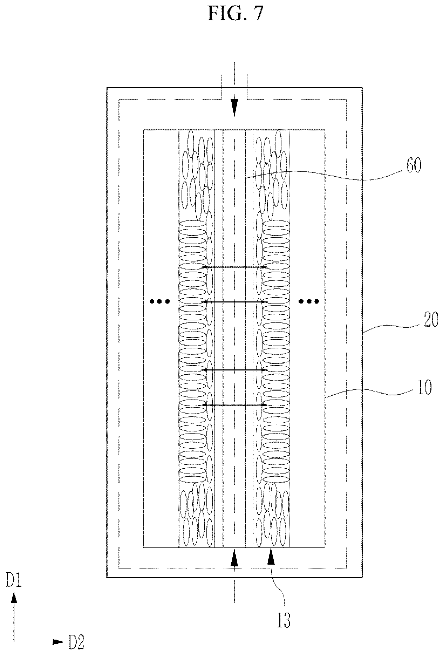

Referring to FIG. 7, if (*e.g*., when) the electrolytic solution is injected into the case 20 accommodating the cylindrical electrode assembly 10, the electrolytic solution flows from both ends of the center pin 60 toward the center of the center pin 60, and the electrolytic solution moves to the active material layer of the adjacently located second electrodes (negative electrodes) 13 while flowing through the center pin 60.

When the electrolytic solution is injected in a first direction D1 parallel to the center pin 60, the electrolytic solution branches into the second direction D2 normal (*e.g*., perpendicular) to the first direction D1 while moving in the first direction D1.

In this case, in one or more embodiments of the present disclosure, the movement distance of the electrolytic solution is relatively long, and the active material particles in the center portion of the electrode assembly, where the electrolytic solution is not easily injected, are arranged in the direction normal (e.g., perpendicular) to the base material, so the movement of the electrolytic solution in the second direction D2 may be made smooth.

Table 1 shows data measuring adhesion according to Comparative Examples 1 and 2 and an Example.

**TABLE 1**

| DOE | Comparative Example 1 | | Comparative Example 2 | | Example | |
|---|---|---|---|---|---|---|
| | A plane | B plane | A plane | B plane | A plane | B plane |
| Adhesion (gf/mm) | 1.66 | 1.36 | 1.21 | 1.19 | 2.13 | 1.71 |

Comparative Example 1 is a battery that is entirely non-aligned because it is not subjected to an alignment process, Comparative Example 2 is a battery that is entirely aligned, and Example is a battery that the center portion is aligned and the edges are non-aligned.

Referring to Table 1, the adhesion of Comparative Example 1, which is entirely non-aligned, is 1.66 and 1.36, and the adhesion of Comparative Example 2, which is entirely aligned, is 1.21 and 1.29, but the adhesions of the Example in which the center portion is aligned and the edges are not aligned are 2.13 and 1.71. Accordingly, it can be seen that the adhesion in the Example is higher than that of Comparative Examples 1 and 2.

Table 2 shows Rion measurement data of a Comparative Example and an Example.

Comparative Example 1 is a battery that does not undergo the alignment process and is therefore entirely non-aligned.

**Table 2**

| PF5.0 | L/L(mg/cm²) | Rion |
|---|---|---|
| Comparative Example 1 | 21.20 | 27.8 |
| Example | 21.78 | 22.7 |

Rion is a resistance value that affects the movement of the lithium ions. The lower the resistance value, the more smoothly the lithium ions move, and the higher the resistance value, the less smoothly the lithium ions move.

Referring to Table 2, the Rion of Comparative Example 1 is 27.8, and the Rion of Example is 22.7, which shows that the Rion of Example has a lower value. Therefore, it can be seen that the Rion of Example is lower than that of Comparative Example 1, and thus, the lithium ions may move more smoothly.

In addition, as a loading level increases and a mixture density increases, the lithium ions may not smoothly move. However, a loading level (L/L) of Comparative Example 1 was 21.20, and the loading level of the Example was 21.78, which indicated that although the loading level of the Example was higher than that of the Comparative Example, the Rion was lower in the Example.

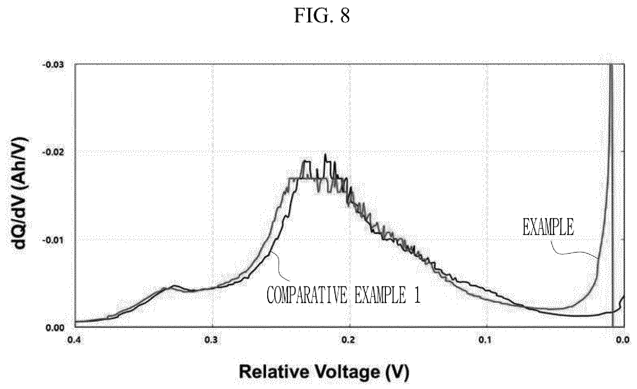

FIG. 8 is a graph showing dQ/dV according to a relative voltage in a Comparative Example and an Example.

Referring to FIG. 8, the more the graph is biased to the left in a graph of a dQ/dV value according to the relative voltage, the more the mobility and motility of the lithium ions increase. Accordingly, it can be seen that the graph in the Example is more to the left compared to the Comparative Example, and thus, the motility has increased.

Table 3 shows kinetic measurement data from FIG. 8.

**Table 3**

| PF5.0 | | | | 0.8C | |
|---|---|---|---|---|---|
| | L/L(mg/cm²) | Mixture density (g/cc) | Current density (mAh/cm²) | | |
| | Actual measurement | Actual measurement | Design | Kinetic value | Precipitation |
| Comparative Example 1 | 10.64 | 1.66 | 2.83 | 47.33 | X |
| Example | 10.76 | 1.66 | 2.83 | 48.67 | X |

A kinetic value was calculated as a value obtained by dividing the capacity when the voltage is 0 in CV data by a C-rate.

Referring to Table 3, when calculating the kinetic value indicating the motility, the kinetic value of the Example is 48.67, which is greater than 47.33 of the Comparative Example 1. Accordingly, it can be seen that the motility of the Example is increased compared to the Comparative Example 1.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Further, the use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The portable device, vehicle, and/or the battery, *e.g*., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

**Reference Numerals**

| | | | |
|---|---|---|---|
| LA: | aligned part | LB: | non-aligned part |
| 2: | base material | 3: | active material layer |
| 3a: | lower layer | 3b: | upper layer |
| 10: | Electrode assembly | 11: | First electrode |
| 13: | Second electrode | 12: | Separator |
| 20: | Case | 21: | Beading part |
| 22: | Clamping part | 30: | Cap assembly |
| 31: | Cap plate | 31a: | Center plate |
| 31b: | Branch part | 31c: | Coupling plate |
| 31d: | Exhaust port | 32: | Vent plate |
| 32a: | Vent | 32b: | Notch |
| 33: | Insulating member | 34: | First auxiliary plate |
| 35: | Positive temperature coefficient element | 37: | Lead tab |
| 38: | Second auxiliary plate | 40: | Gasket |
| 50: | Insulating plate | 51: | Opening |
| 52: | Insulating pad | 60: | Center pin |

## Claims

1. A negative electrode comprising:
a base material (2) having a strip shape, a width of the base material (2) in a first direction being relatively shorter than a length of the base material (2) in a second direction intersecting the first direction; and
an active material layer (3) on the base material (2) and comprising an aligned part and a non-aligned part, the active material layer (3) arranged in the first direction in an order of the non-aligned part, the aligned part, and the non-aligned part,
wherein the aligned part comprises a lower layer (3a) and an upper layer (3b) stacked on the base material (2), and alignment directions of the lower layer (3a) and the upper layer (3b) are different from each other, and
wherein the negative electrode is for a rechargeable battery (1000).

2. The negative electrode as claimed in claim 1, wherein:
the upper layer (3b) comprises active material particles aligned at an angle with respect to a surface of the base material (2), and
the lower layer (3a) comprises active material particles arranged in a direction parallel to the surface of the base material (2).

3. The negative electrode as claimed in claims 1 or 2, wherein a I₀₀₂/I₁₁₀ value of the upper layer (3b) is smaller than a I₀₀₂/I₁₁₀ value of the lower layer (3a).

4. The negative electrode as claimed in any one of claims 1 to 3, wherein the upper layer (3b) comprises active material particles aligned at an angle with respect to a surface of the base material (2), wherein the angle of the active material particles of the upper layer (3b) is about 10° to about 80° with respect to the surface of the base material (2).

5. The negative electrode as claimed in any one of claims 1 to 4, wherein a I₀₀₂/I₁₁₀ value of the aligned part is smaller than a I₀₀₂/I₁₁₀ value of the non-aligned part.

6. The negative electrode as claimed in any one of claims 1 to 5, wherein the upper layer (3b) and the lower layer (3a) are made of different active materials.

7. The negative electrode as claimed in any one of claims 1 to 6, wherein a width of the aligned part in the first direction is about 10% to about 90% of a width of the active material layer (3) in the first direction.

8. The negative electrode as claimed in any one of claims 1 to 7, wherein:
a thickness of the lower layer (3a) is about 10% to about 90% of a total thickness of the active material layer (3), and
a thickness of the upper layer (3b) is about 10% to about 90% of the total thickness of the active material layer (3).

9. A rechargeable battery (1000) comprising:
a winding type electrode assembly (10) comprising:
the negative electrode as claimed in any one of claims 1 to 8,
a separator (12), and
a positive electrode;
a case (20) accommodating the winding type electrode assembly (10);
a cap plate (31) installed in an opening of the case (20) to seal an inside of the case (20); and
an electrolyte accommodated with the winding type electrode assembly in the case (20),
wherein the first direction is a direction in which the electrolyte is injected into the case (20).

10. The rechargeable battery (1000) as claimed in claim 9, wherein the winding type electrode assembly (10) is a cylindrical electrode assembly.
